# FASCICULE DE BREVET EUROPEEN

(11) **EP 4 123 390 B1**
(45) Date de publication et mention de la délivrance du brevet: **26.08.2026**
(21) Numéro de dépôt: 21186468.1
(22) Date de dépôt: 19.07.2021
(51) Int. Cl.: B28B 3/10, B28B 11/12, B32B 18/00, C04B 35/486, G04B 5/16, B28B 1/00, G04B 19/04, G04B 19/12, G04B 19/28, G04B 29/02, G04B 37/22, G04B 47/00, G04D 3/00

(54) **ARTICLE MULTICOLORE EN CERMET ET/OU CÉRAMIQUE ET SON PROCÉDÉ DE FABRICATION**
MEHRFARBIGER ARTIKEL AUS ZERMET UND/ODER KERAMIK UND SEIN HERSTELLUNGSVERFAHREN
MULTI-COLOURED ITEM MADE FROM CERMET AND/OR CERAMIC AND MANUFACTURING METHOD THEREOF

(43) Date de publication de la demande: 25.01.2023
(73) Titulaire: Comadur S.A., 2400 Le Locle (CH)
(72) Inventeur: LAMBERT OBERSON, Maryline, 25130 Villers-le-Lac (FR); ACTIS-DATTA, Arnaud, 2854 Bassecourt (CH); BESUTTI, Bruno, 25140 Charquemont (CH); NETUSCHILL, Alexandre, 2517 Diesse (CH)
(74) Mandataire: ICB SA

(56) Documents cités:
- EP-A1- 3 622 846
- CH-A2- 708 654
- CN-A- 108 439 997
- CN-A- 110 666 931

## Description

### DOMAINE TECHNIQUE

La présente invention se rapporte à un procédé de fabrication par compression d'un article en cermet et/ou en céramique multicolore avec un décor en relief. Un exemple de réalisation décrit un composant horloger tel qu'une lunette, réalisé par compression de matières céramiques et/ou cermets de couleurs différentes avec une couleur formant un décor du composant horloger.

### ART ANTERIEUR

Les composants horlogers en céramique ou en cermet sont généralement obtenus par un procédé d'injection ou de compression d'une matière suivi d'un frittage. Ces composants présentent souvent un décor, tel que des index et des chiffres pour une lunette, qui est de couleur distincte du reste du composant. Les éléments du décor sont généralement rapportés par brasage ou collage sur l'ébauche issue du frittage. Cet assemblage mécanique entre l'ébauche et les éléments du décor peut se révéler coûteux et compliqué à mettre en œuvre.

Une alternative à cet assemblage mécanique consiste comme décrit dans le document EP 2 746 243 à imprégner une partie du corps vert avant frittage avec une solution comprenant un métal agissant comme pigment. Ce procédé présente cependant pour désavantage qu'il est difficile d'obtenir une couleur uniforme dans la masse de la partie colorée.

Le document CH 708 654 A2 montreun élément céramique incrusté d'au moins un décor en une autre céramique.

### RESUME DE L'INVENTION

La présente invention a pour objet de pallier aux désavantages précités en proposant un nouveau procédé de compression multi-matières de couleurs distinctes, avec une étape ultérieure d'usinage du décor dans une des couleurs.

A cet effet, la présente invention se rapporte à un procédé de fabrication comprenant une étape d'ablation laser pour réaliser le décor dans une des couleurs.

Plus précisément, l'invention se rapporte à un procédé de fabrication par compression d'un article en cermet et/ou en céramique multicolore avec un décor en relief, ledit procédé comprenant les étapes suivantes :
- Mise à disposition d'au moins une première matière et une seconde matière, ladite première matière se distinguant de la seconde matière par sa couleur, lesdites première et seconde matières étant soit une céramique, soit un cermet,
- Mise à disposition d'au moins un outil de compression avec un premier outil de compression et éventuellement un deuxième outil de compression,
- Remplissage et compression de la première matière au sein du premier outil de compression,
- Remplissage et compression de la seconde matière sur la première matière au sein du premier outil de compression ou au sein du deuxième outil de compression pour obtenir un corps vert,
- Frittage du corps vert pour former une ébauche,
- Usinage par ablation laser de la seconde matière sur le corps vert ou sur l'ébauche pour réaliser le décor en relief, ladite seconde matière étant creusée par ablation laser au moins jusqu'à la première matière pour révéler ladite première matière et obtenir le décor en relief dans ladite seconde matière se dressant sur la première matière,
- Finition de l'ébauche pour obtenir l'article.

Avantageusement, le procédé comprend en outre une autre étape d'usinage avant et/ou après l'étape de frittage pour mettre à dimension respectivement le corps vert et/ou l'ébauche.

D'autres caractéristiques et avantages de la présente invention apparaîtront dans la description suivante d'un mode de réalisation préféré, présenté à titre d'exemple non limitatif en référence aux dessins annexés.

### BREVE DESCRIPTION DES FIGURES

La figure 1 représente schématiquement les différentes étapes mises en œuvre lors de la compression de deux matières distinctes dans deux outils différents.
La figure 2 représente schématiquement une variante avec les différentes étapes mises en œuvre lors de la compression de deux matières distinctes dans un seul outil.
La figure 3 représente une vue tridimensionnelle de l'ébauche issue de la bi-compression de matières et du frittage.
La figure 4 représente une vue tridimensionnelle d'une lunette décorée issue du procédé de fabrication selon l'invention.
La figure 5 représente une vue en plan d'une autre lunette décorée issue du procédé de fabrication selon l'invention.

### DESCRIPTION DETAILLEE

La présente invention se rapporte à un procédé de fabrication par compression d'un article réalisé avec au moins deux matières distinctes qui sont soit un cermet, soit une céramique. On entend par matières distinctes des matières se différentiant par leur aspect esthétique, et en particulier leur couleur. Cela traduit par des différences de compositions chimiques. Il peut s'agir d'une même matière de base avec des pigments différents pour changer la couleur ou de matières de base différentes. A titre d'exemple, il peut s'agir d'une même matière de base en oxyde de zirconium avec, d'une part, un pigment noir pour obtenir une matière noire et, d'autre part, de l'alumine pour obtenir la couleur blanche. De manière plus générale, les céramiques peuvent être des nitrures, des carbures et/ou des oxydes. De même, les cermets peuvent comporter une phase céramique comportant des carbures, des nitrures et/ou des oxydes et une phase d'un liant métallique choisi, par exemple, parmi les éléments précieux tels que le ruthénium, le rhodium, le palladium, l'osmium, de l'iridium, le platine, l'or et l'argent.

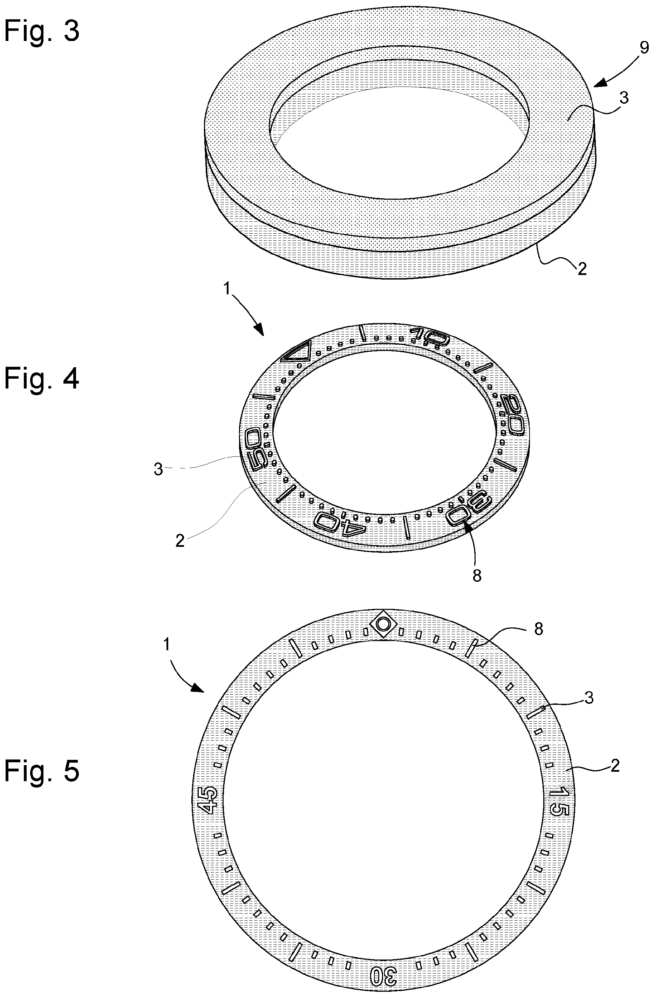

L'article obtenu peut être un article décoratif tel qu'un élément constitutif de montres, bijoux, bracelets, etc. Dans le domaine horloger, cet article peut être un composant d'habillage tel qu'une carrure, un fond, une lunette, un insert de lunette, un poussoir, une couronne, un maillon de bracelet, une boucle, un cadran, une aiguille, un index de cadran, etc. Il peut également s'agir d'un composant du mouvement tel qu'une masse oscillante, une platine, etc. A titre illustratif, l'article est une lunette 1 réalisée avec deux céramiques de couleurs différentes, par exemple le noir et le blanc, avec une couleur qui forme le fond et une autre couleur qui forme le décor 8 tel que représenté aux figures 4 et 5. Toujours à titre d'exemple, il pourrait s'agir d'un sigle sur une couronne de montre.

L'article est réalisé par compression des matières différentes pour former un corps vert et par frittage dudit corps vert. Le procédé de fabrication est illustré ci-après pour un article comprenant deux matières distinctes mais il pourrait s'agir d'un article comprenant 3, 4, etc. matières différentes. De même, il est illustré pour un article avec un décor d'une même couleur alors qu'il pourrait y avoir des décors de couleurs différentes.

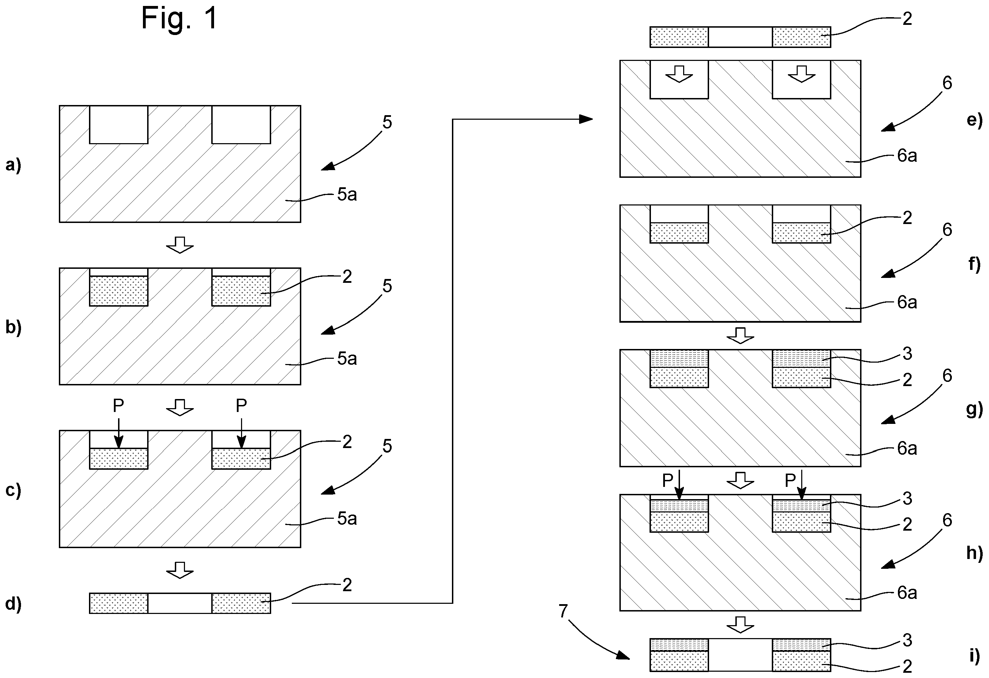

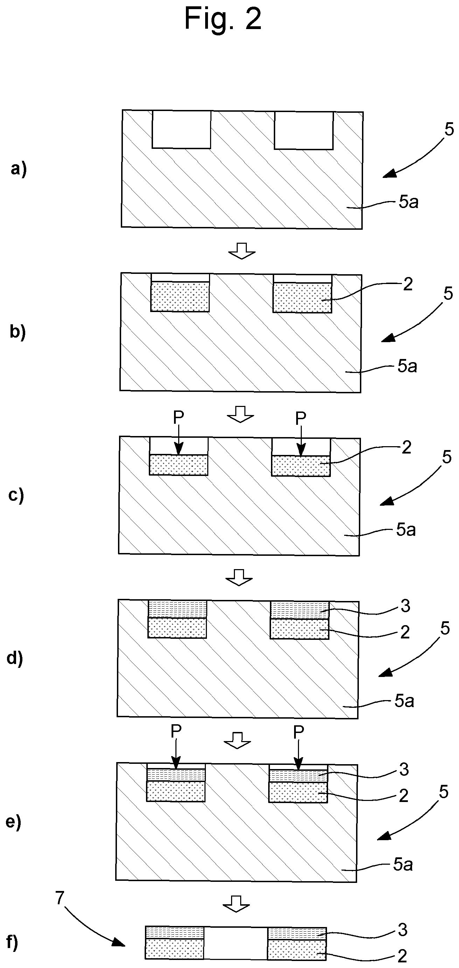

Le procédé de fabrication comporte les étapes suivantes en référence aux figures 1 à 5:
- Mise à disposition d'au moins une première matière 2 et une seconde matière 3, ladite première matière se distinguant de la seconde matière par sa couleur et donc par sa composition chimique, lesdites première et seconde matières étant soit une céramique, soit un cermet. Ainsi, les première et seconde matières peuvent être toutes les deux une céramique ou toutes les deux un cermet ou encore une matière peut être une céramique et l'autre un cermet,
- Mise à disposition d'au moins un outil de compression avec un premier outil de compression 5 et éventuellement un deuxième outil de compression 6 (fig.1a) et 1e), fig.2a)),
- Remplissage et compression de la première matière 2 au sein du premier outil de compression 5 (fig.1b) et 1c)), fig.2b) et 2c)),
- Remplissage et compression de la seconde matière 3 sur la première matière 2 au sein du premier outil de compression 5 (fig.2d) et 2e)) ou au sein du deuxième outil de compression (fig.1g) et 1h)) pour obtenir un corps vert 7 (fig.1i) et 2f)),
- Frittage du corps vert 7 pour former une ébauche 9 (fig.3),
- Usinage par ablation laser d'au moins la seconde matière 3 sur le corps vert 7 ou sur l'ébauche 9 pour réaliser un décor 8 se dressant sur la première matière 2 du corps vert 7 ou de l'ébauche 9, la seconde matière 3 étant creusée jusqu'à la première matière 2 pour révéler cette dernière et ne laisser subsister dans ladite seconde matière 3 qu'un décor 8,
- Finition de l'ébauche 9 pour former l'article 1.

L'étape d'usinage par ablation laser peut être réalisée avant le frittage, c.à.d. sur le corps vert, ou après le frittage, c.à.d. sur l'ébauche.

En présence de plus de deux matières de couleurs différentes, les différentes matières peuvent être creusées pour dessiner des décors de couleurs différentes. Ainsi, au moins une troisième matière en cermet ou en céramique de couleur distincte de celles de la première et seconde matière est mise à disposition. Cette troisième matière est comprimée sur la seconde matière dans un même outil de compression ou dans un autre outil de compression. Le corps vert est ensuite fritté. Le décor dans cette troisième matière est réalisé par gravage laser en creusant cette matière jusqu'au moins la seconde matière pour former un décor se dressant sur la seconde matière. La troisième matière peut également être creusée jusqu'à la première matière pour réaliser un décor se dressant sur la première matière. La troisième matière peut également être creusée sur une partie jusqu'à la seconde matière et sur une autre partie jusqu'à la première matière pour réaliser un décor se dressant pour une partie sur la première matière et pour une autre partie sur la seconde matière.

L'ablation laser est préférentiellement réalisée avec un laser à impulsion tel qu'un laser picoseconde, nanoseconde ou femtoseconde.

Le procédé peut en outre comporter une autre étape d'usinage, aussi dite deuxième étape d'usinage, destinée à mettre à dimension le corps vert et/ou l'ébauche. Préférentiellement, elle est opérée sur le corps vert avant frittage de manière à ce que la matière ne soit pas trop dure. La présente invention n'exclut pas que cette étape d'usinage soit réalisée en partie avant le frittage et en partie après le frittage. Le gravage laser pour obtenir le décor peut également être réalisé avant ou après cette autre étape d'usinage.

Le procédé peut optionnellement comporter une étape de déliantage avant l'étape de frittage si les matières ont été injectées avec un système de liants organiques (paraffine, polyéthylène, etc.).

Finalement, le procédé de fabrication comporte une étape de finition telle que du polissage, satinage, matification, etc.

Selon la variante de la figure 1, la première matière 2 est comprimée dans le premier outil de compression 5 et la matière comprimée est extraite de l'outil avant d'être introduite dans le deuxième outil de compression 6. La seconde matière 3 est ensuite comprimée sur la première matière 2 dans le deuxième outil de compression 6. Avantageusement, ce deuxième outil de compression est de dimensions légèrement supérieures à celles du premier outil de compression car le volume de la première matière augmente lors du relâchement de la pression au moment du transfert vers le deuxième outil de compression. Le corps vert 7 comprenant les deux matières comprimées est finalement extrait du deuxième outil pour réaliser le frittage, l'ablation laser, la deuxième étape d'usinage et l'étape de finition.

Selon la variante de la figure 2, les deux matières 2,3 sont comprimées au sein d'un même outil de compression 5.

Dans l'exemple illustré, l'outil de compression 5,6, qu'on peut également qualifier de presse, comporte une partie fixe 5a avec un moule ayant une empreinte en forme d'anneau pour réaliser une lunette, la partie mobile qui assure la compression des matières n'étant pas représentée.

La figure 3 représente l'ébauche 9 issue de la bi-compression et du frittage avec la seconde matière 3 superposée sur la première matière 2.

Avant ou après le frittage et éventuellement le deuxième usinage, la seconde matière 3 est creusée par ablation laser jusqu'au moins la première matière 2 pour former le décor 8 dans une couleur distincte du substrat formé par la lunette 1 tel que montré aux figures 4 et 5.

Typiquement, une lunette 1 selon les figures 4 et 5 est obtenue par compression d'une zircone blanche et d'une zircone noire et par frittage à une température de 1400°C pendant un temps de 48 heures sous une atmosphère oxydante.

### Légende

- (1): Article, composant horloger ou lunette
- (2): Première matière
- (3): Seconde matière
- (5): Premier outil de compression
a. Partie fixe du moule
- (6): Deuxième outil de compression
a. Partie fixe du moule
- (7): Corps vert
- (8): Décor
- (9): Ebauche

## Revendications

1. Procédé de fabrication par compression d'un article en cermet et/ou en céramique multicolore avec un décor (8) en relief, ledit procédé comprenant les étapes suivantes :
- Mise à disposition d'au moins une première matière (2) et une seconde matière (3), ladite première matière (2) se distinguant de la seconde matière (3) par sa couleur, lesdites première (2) et seconde (3) matières étant soit une céramique, soit un cermet,
- Mise à disposition d'au moins un outil de compression avec un premier outil de compression (5) et éventuellement un deuxième outil de compression (6),
- Remplissage et compression de la première matière (2) au sein du premier outil de compression (5),
- Remplissage et compression de la seconde matière (3) sur la première matière (2) au sein du premier outil de compression (5) ou au sein du deuxième outil de compression (6) pour obtenir un corps vert (7),
- Frittage du corps vert (7) pour former une ébauche (9),
- Usinage par ablation laser de la seconde matière (3) sur le corps vert (7) ou sur l'ébauche (9) pour réaliser le décor (8) en relief, ladite seconde matière (3) étant creusée par ablation laser au moins jusqu'à la première matière (2) pour révéler ladite première matière (2) et obtenir le décor (8) en relief dans ladite seconde matière (3) se dressant sur la première matière (2),
- Finition de l'ébauche (9) pour obtenir l'article.

2. Procédé de fabrication selon la revendication précédente, **caractérisé en ce qu'**il comporte une autre d'étape d'usinage pour mettre à dimension le corps vert (7) ou l'ébauche (9), ladite autre étape d'usinage étant réalisée avant ou après l'étape d'usinage par ablation laser.

3. Procédé de fabrication selon la revendication 1 ou 2, **caractérisé en ce qu'**au moins une troisième matière est mise à disposition, ladite troisième matière se distinguant de la seconde matière (3) et de la première matière (2) par sa couleur, ladite troisième matière étant soit une céramique, soit un cermet, ladite troisième matière étant comprimée sur la seconde matière (3) et creusée par ablation laser au moins jusqu'à la seconde matière (3) pour obtenir le décor (8) en relief dans la troisième matière se dressant sur la seconde matière (3) et/ou sur la première matière (2).

4. Procédé de fabrication selon l'une des revendications précédentes, **caractérisé en ce que** l'ablation laser est réalisée avec un laser à impulsion.

## Patentansprüche

1. Verfahren zur Herstellung durch Kompression eines Artikels aus Cermet und/oder mehrfarbiger Keramik mit einem Dekor (8) im Relief, wobei dieses Verfahren folgende Schritte umfasst:
- Bereitstellen von mindestens einem ersten Material (2) und einem zweiten Material (3), wobei sich das erste Material (2) durch seine Farbe vom zweiten Material (3) unterscheidet, wobei es sich bei dem ersten (2) und zweiten (3) Material entweder um eine Keramik oder um ein Cermet handelt,
- Bereitstellen von mindestens einem Kompressionswerkzeug mit einem ersten Kompressionswerkzeug (5) und gegebenfalls einem zweiten Kompressionswerkzeug (6),
- Befüllen und Komprimieren des ersten Materials (2) im ersten Kompressionswerkzeug (5),
- Befüllen und Komprimieren des zweiten Materials (3) auf dem ersten Material (2) im ersten Kompressionswerkzeug (5) oder im zweiten Kompressionswerkzeug (6), um einen Grünkörper (7) zu erhalten,
- Sintern des Grünkörpers (7), um einen Rohling (9) zu bilden,
- Laserabtrag der zweiten Materialschicht (3) auf dem Grünkörper (7) oder dem Rohling (9) zur Ausbildung des Reliefdekors (8), wobei die zweite Materialschicht (3) durch Laserablation mindestens bis zur ersten Materialschicht (2) ausgehöhlt wird, um diese freizulegen und das Reliefdekor (8) in der verbleibenden zweiten Materialschicht (3) zu erhalten, die sich über der ersten Materialschicht (2) erhebt.
- Endbearbeiten des Rohlings (9), um den Artikel zu erhalten.

2. Herstellungsverfahren nach dem vorstehenden Anspruch, **dadurch gekennzeichnet, dass** es einen weiteren Bearbeitungsschritt aufweist, um den Grünkörper (7) oder den Rohling (9) auf Maß zu bringen, wobei dieser weitere Bearbeitungsschritt vor oder nach dem Bearbeitungsschritt durch Laserablation durchgeführt wird.

3. Herstellungsverfahren nach Anspruch 1 oder 2, **dadurch gekennzeichnet, dass** mindestens ein drittes Material zur Verfügung gestellt wird, wobei dieses dritte Material sich durch seine Farbe vom zweiten Material (3) und vom ersten Material (2) unterscheidet, wobei das dritte Material entweder eine Keramik oder ein Cermet ist, wobei das dritte Material auf das zweite Material (3) gepresst wird und durch Laserablation mindestens bis zum zweiten Material (3) ausgehöhlt wird, um das Reliefdekor (8) im dritten Material zu erhalten, das sich auf dem zweiten Material (3) und/oder auf dem ersten Material (2) erhebt.

4. Herstellungsverfahren nach einem der vorhergehenden Ansprüche, **dadurch gekennzeichnet, dass** die Laserablation mit einem Impulslaser durchgeführt wird.

## Claims

1. A method for manufacturing by compression a cermet and/or ceramic multi-coloured article with a relief decoration (8), said method comprising the following steps:
- Providing at least a first material (2) and a second material (3), said first material (2) being distinguished from the second material (3) by its colour, said first (2) and second (3) materials being either a ceramic or a cermet,
- Providing at least one compression tool with a first compression tool (5) and optionally a second compression tool (6),
- Filling and compressing the first material (2) within the first compression tool (5),
- Filling and compressing the second material (3) on the first material (2) within the first compression tool (5) or within the second compression tool (6) to obtain a green body (7),
- Sintering the green body (7) to form a blank (9),
- Machining, by laser ablation, the second material (3) on the green body (7) or on the blank (9) to produce the relief decoration (8), said second material (3) being hollowed, by laser ablation, at least to the first material (2) to reveal said first material (2) and obtain the relief decoration (8) in said second material (3) standing on the first material (2),
- Finishing the blank (9) to obtain the article.

2. The manufacturing method according to the preceding claim, **characterised in that** it includes another machining step to dimension the green body (7) or the blank (9), said other machining step being carried out before or after the step of machining by laser ablation.

3. The manufacturing method according to claim 1 or 2, **characterised in that** at least a third material is provided, said third material being distinguished from the second material (3) and from the first material (2) by its colour, said third material being either a ceramic, or a cermet, said third material being compressed on the second material (3) and hollowed, by laser ablation, at least to the second material (3) to obtain the relief decoration (8) in the third material standing on the second material (3) and/or on the first material (2).

4. The manufacturing method according to one of the preceding claims, **characterised in that** the laser ablation is carried out with a pulsed laser.
